# EUROPEAN PATENT APPLICATION

(11) **EP 3 925 934 A1**
(43) Date of publication of application: **22.12.2021**
(21) Application number: 19915154.9
(22) Date of filing: 03.12.2019
(51) Int. Cl.: C02F 1/44, B01D 25/00, B01D 63/00

(54) **LIQUID PURIFICATION SYSTEM**

(30) Priority: 12.02.2019 RU 2019103968
(71) Applicant: Electrophor, Inc., Woodmere NY 11598 (US)
(72) Inventor: TATUEV, Yurij Vladimirovich, 191036 St.Petersburg (RU); UROZHAEV, Vladimir Sergeevich, 197022 St.Petersburg (RU); BOCHLIN, Alexander Izevich, Atlit (IL); SHMIDT, Joseph L., 11598, New York (US)
(74) Representative: Danubia Patent & Law Office LLC
(86) International application number: PCT/RU2019/000879
(87) International publication number: WO 2020/167161

(57) **Abstract**

The invention relates to liquid purification systems with filtration membranes application, intended for liquid purification and desalination, predominantly water from different recourses, including drinking water, process medium, drainage, drinks and other liquids in household or technical conditions, in country and suburban and garden plots.

The liquid purification system comprises a raw liquid supply line, a liquid purification unit connected to the raw liquid supply line, a purified liquid line connected to a purified liquid outlet of the liquid purification unit, and a drainage liquid line connected to a drainage liquid outlet of the liquid purification unit, besides the liquid purification unit comprises at least two membranes in shells and connected to each other through two collectors, wherein each collector is formed by at least two elements, communicating with each other through adapter plugs and connected with each other with fastener.

## Description

The invention relates to liquid purification systems with filtration membranes application, intended for liquid purification and desalination, predominantly water from different recourses, including drinking water, process medium, drainage, drinks and other liquids in household or technical conditions, in country and suburban and garden plots.

Liquid purification system of a patent US 7850847 (IPC B01D 63/06, priority 16.08.2004, applicant Peter Grodon Brown) is known from the state of the art. Liquid purification system consists of raw liquid supply line connected to raw liquid inlet of the liquid purification unit, drainage line, connected to drainage liquid outlet of the liquid purification unit and purified liquid line, connected to purified liquid outlet of the liquid purification unit. Liquid purification unit, in its turn, consists of two accumulators and at least two reverse osmosis membranes in housing are installed between them. Channels for raw and process liquid connecting membranes between each other are made in one of the accumulators. The channel where all purified liquid is collected is made in the other accumulator. Membranes are connected one by one between each other.

Liquid purification system operates as follows. Raw liquid from the source through raw liquid supply line flows to liquid purification unit. Raw liquid flows into the first membrane. After the first membrane processed liquid through the channel, made in the accumulator, flows to the second membrane and so on till the last membrane. Drainage liquid after the last membrane is discharged form the system through drainage liquid line. Purified liquid from all membranes flows into channel, made in the second collector and further through purified liquid line goes to a consumer.

Liquid purification system of a patent US 7850847 has drawbacks. In the system membranes are connected one by one, so the first membrane has minimal load and the last one has the maximum load from the debris. It means that lifetime of the last membrane is shorter than of all others. The system of such construction cannot be adapted to different membrane types, so the membrane with expired lifetime should be changed to the membrane of the same type. Also collectors always have certain number of membranes, so collectors must be produced to every new system individually with adjusted shape and size. If it is needed to install one more membrane collectors have to be produced from the beginning.

Liquid purification system of a patent US 5194149 (IPC B01D 27/08, priority 29.09.1989, applicant Memtec Limited) is known from the state of the art. Liquid purification system comprises raw liquid supply line, connected to raw liquid input of the liquid purification unit, drainage discharge line, connected to drainage outlet of the liquid purification unit and purified liquid line, connected to purified liquid outlet of the liquid purification unit. Liquid purification unit consists of two collectors - upper and lower, and they consist of the elements. Between each pair of elements of the upper collector and lower collector there is an ultrafiltration membrane in casing. Elements are connected between each other with bolted elements, and parts of end-to-end channels each of the elements form one joint channel. Also units can be connected into three dimensional construction with connecting angel element, which also is the part of the collector. Channels inside connecting angel element are made so that raw liquid flows from one unit to the other, and membranes of one unit work one after another and membranes of the adjacent units work in parallel.

The system of a patent US 5194149 works as following. Raw liquid from the source flows along raw liquid supply line into liquid purification unit and spreads between all membranes of the unit. Then purified liquid flows into a channel of the purified liquid and drainage liquid - into drainage liquid channel. If there are several rows of the units, they will work in series. Drainage liquid of the first unit is the raw liquid for the second unit and so on. Purified liquid flows to the consumer through the purified liquid line and drainage liquid is drained from the system through drainage liquid line.

System of a patent US 5194149 has its drawbacks. Elements of the units are connected together with bolt elements. Such connection can slack due to vibrations and pressure drops and this can lead to disconnection and depressurization. Also in the system of a patent US 5194149 it is impossible to have series and series-parallel connection within one unit. Only ultrafiltration membranes can be used in system of US 51941496 so the liquid purification degree cannot be increased within the system.

Liquid purification system of a patent US 3734297 (IPC BOld 31/00, priority 02.02.1972, applicant Universal Water Corporation), is known from the state of the art and chosen as the closest analogue. Liquid purification system consists of raw liquid supply line, connected to raw liquid inlet of the liquid purification unit, drainage liquid line, connected to drainage liquid outlet of the liquid purification unit, purified liquid line, connected to purified liquid outlet. Liquid purification unit consists of two shells, each of the shell has a collector inside with the at least two reverse osmosis membranes in housings placed between them. The raw liquid inlet, connected to raw liquid supply line and a drainage liquid outlet, connected to drainage liquid line can be made in one of the collectors

Outlet apertures for the purified liquid of the reverse osmosis membranes, connected to purified liquid line, can be made in the second collector. Also drainage liquid outlet can be made in this collector too.

Hollows for at least two reverse osmosis membranes in shells are made in collectors. The width of each hollow is equal to diameter of a reverse osmosis membrane in shell. The length of the hollow depends on amount of reverse osmosis membranes in shells which will be put inside it within one liquid purification unit. In each hollow of the second collector there is an adapter. Adapters are connected between each other and form channel for purified liquid.

Each shell with reverse osmosis membrane is installed at one end into the hollow of the first collector and at another end into the hollow of the second collector. Purified water outlets of membranes are sealingly connected with purified liquid channels, formed from adapters, placed in hollows, which are made in the second collector.

Collectors can have different hollows. The choice is defined with how membranes are connected.

For example, for membrane cascade the first hollow in the first collector has length as one diameter of the membrane in a shell. In the second collector the second hollow is two membrane-in-a-shell-length. The third hollow with length equal to the second hollow is made in the first tube at a distance equal to the length of the first hollow. The upper part of the third hollow is on the same level as lower part of the second hollow. Further the gradation of the hollows repeats.

Liquid purification system of a patent US 3734297 works as follows. When membranes are connected in series raw liquid from the source flows through raw liquid supply line into the inlet of the first reverse osmosis membrane.

Purified liquid through adapter flows into purified liquid line. Drainage liquid of the first membrane through hollows flows into the raw liquid inlet of the second membrane. And so on. Drainage liquid from the last membrane flows out of the system along the drainage liquid line. Purified liquid through adapters flows into the purified liquid line to the consumer.

In a patent US 3734297 parallel and series-parallel connection are also described in a patent.

Liquid purification system of a patent US 3734297 has substantial drawback - collectors with hollows have to be produced beforehand and in pairs, because each pair of collectors provides only one type of connection. If amount of membranes changes, collectors have to be produced anew, adapting hollows and walls to the connection type required. So, the system cannot be adapted to changing conditions during exploitation, because construction of the system cannot be adapted to different membranes type and the membrane out of order has to be changed to a new identical one.

The object of the invention and the technical result achieved with the use of the invention is to develop new liquid purification system adapted to different conditions during its exploitation and ergonomics and reliability increase.

Problem to solve and claimed technical result when using this invention is achieved by a liquid purification system comprising a raw liquid supply line, a liquid purification unit connected to the raw liquid supply line, a purified liquid line connected to a purified liquid outlet of the liquid purification unit, and a drainage liquid line connected to a drainage liquid outlet of the liquid purification unit, besides the liquid purification unit comprises at least two membranes in shells and connected to each other through two collectors wherein each collector is formed by at least two elements communicating with each other through adapter plugs and connected with each other with fastener. Moreover, preferably the connection between the collectors and the adapter plugs is threadless, and the adapter plugs are equipped with stoppers, made as clamps. Also the system may comprise a recirculation line connected to the drainage liquid line and to the raw liquid supply line before entering the liquid purification unit. Preferably, the liquid purification unit may additionally comprise an coupling element and an empty membrane shell.

### Brief description of drawings.

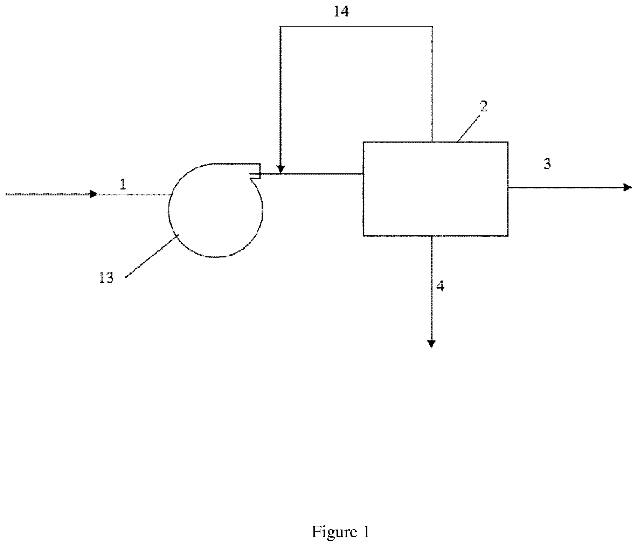

Liquid purification system example is given in figure 1.

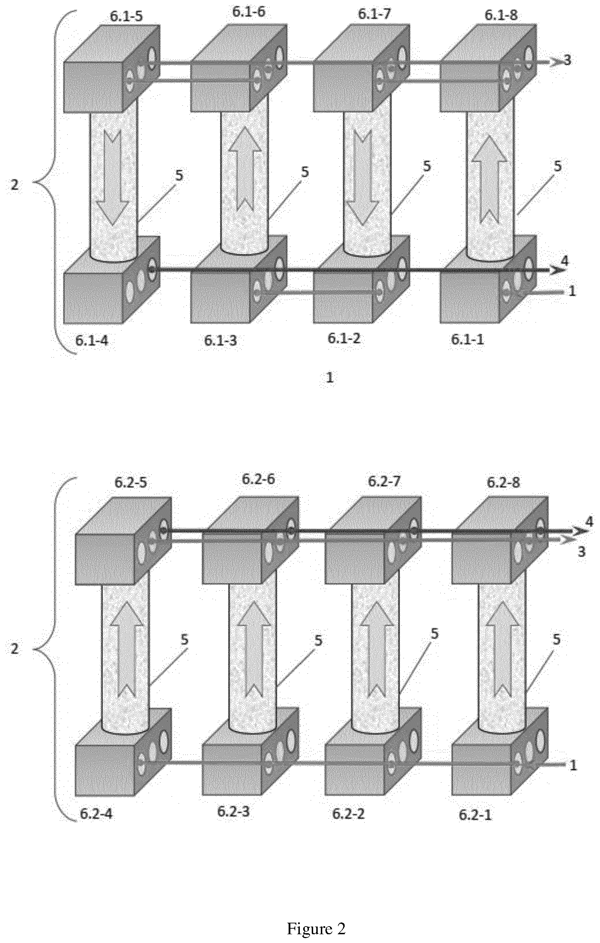

Examples of series (a) and parallel (b) membrane connection are given in figure 2.

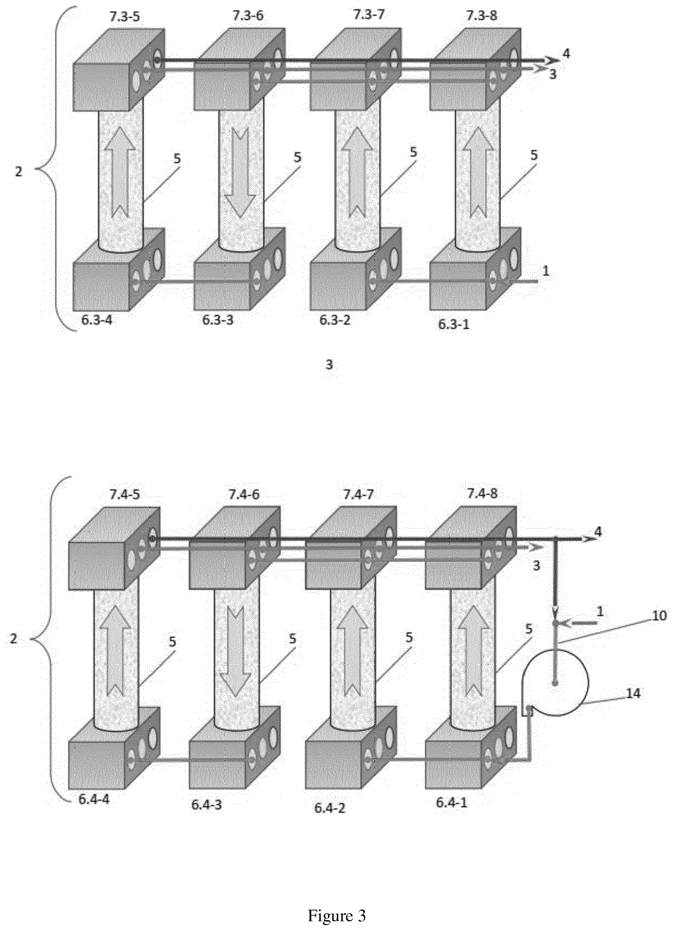

Examples of series-parallel connection (c) and system with recirculation (d) are given in figure 3.

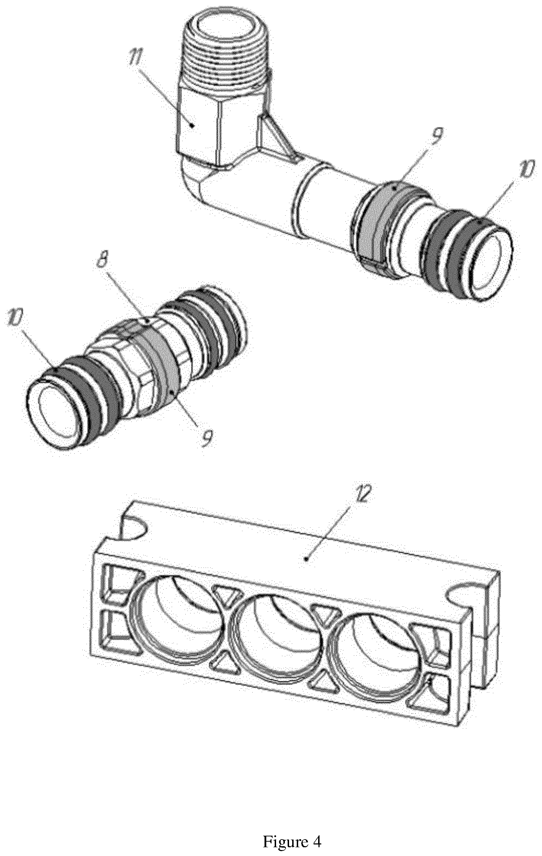

An adapter plug, a fitting and a coupling element are shown in figure 4.

Liquid purification system comprises raw liquid supply line 1, liquid purification unit 2, connected to raw liquid supply line 1, where pump 13 is installed, purified liquid line 3 and drainage liquid line 4 (figure 1). Additionally system may comprise recirculation line 10. In this case, recirculation line 10 is connected to drainage line 4 and to raw liquid supply line 1 before liquid purification unit 2.

Liquid purification unit 2 comprises at least two membranes 5, communicating with each other through at least two collectors. Each collector is formed from elements. Membranes 5 are placed between these elements. Elements are connected between each other with, at least one fastener (not depicted in the figures), and, at least one adapter plug 8. Inner space of the elements is divided into hollows. Two hollows can be made within one element - elements 6 and 7. In elements 6 and 7 one of the hollows is intended only for purified liquid. The functionality of other one or two hollows depends on how liquid purification unit 2 works. Elements 6 and 7 communicate through adapter plugs 8 (figure 4), which connect hollows of adjacent elements. Each adapter plug 8 is equipped with a clamp 9 and additionally may be sealed with rings 10 (figure 4). Clamp 9 provides leak resistance and stability of construction during pressure drops and vibrations (figure 4). In comparison with claimed invention collector of the closest analogue has no digress of freedom and there is no compensation of stress.

In liquid purification unit 2 membranes 5 can be connected with each other in series, parallel or series-parallel.

In the claimed invention term raw liquid means the liquid, flowing through raw liquid supply line 1 into liquid purification unit 2, processed liquid - liquid, circulating in the liquid purification unit 2, drainage liquid - liquid flowing out of the system along the drainage liquid line 4, this liquid can be concentrate from reverse osmosis membranes, flushing liquid, which is formed after reverse osmosis membranes flushing, or partly none filtered liquid, flowing along membranes shells of the liquid purification unit 2, purified liquid - liquid filtered through membranes 5 and flowing to a consumer along purified liquid line 3. Membranes 5 of the liquid purification unit 2 may be of two types - hollow fiber membranes and reverse osmosis membranes. Liquid purification unit 2 can comprise membranes of one type as well as of membranes of two types. Also the surface of hollow fiber membranes can be covered with sorbent.

Fastener (not depicted in the figures), connecting each pair of elements 6 can be made as main detail and two catches. Main detail may be configured II or U-shaped.

On the figure 2a series connection of membranes 5 is depicted, when both collectors of liquid purification unit 2 are formed from elements 6. Raw liquid hollow element 6.1-1 is connected to raw liquid supply line 1. Hollow of processed liquid of the element 6.1-8 through the adapter plug 8 is connected with the raw liquid hollow of the element 6.1-7. Hollow of processed liquid of the element 6.1-2 through the adapter plug 8 is connected with the raw liquid hollow of the element 6.1-3. Hollow of processed liquid of the element 6.1-6 through the adapter plug 8 is connected with the raw liquid hollow of the element 6.1-5. Hollows of the drainage liquid of the elements 6.1-1, 6.1-2, 6.1-3, 6.1-4 are connected together through adapter plugs 8 and are intended for drainage liquid discharge after the last membrane 5. All hollows for purified liquid of elements 6.1-5, 6.1-6, 6.1-7, 6.-8 are connected through adapter plugs 8. Hollow of the purified liquid of the first element 6.1-8 is connected to purified liquid line 3. And further similarly, according to amount of membranes in the liquid purification unit 2.

On the figure 2b parallel connection of membranes 5 is depicted, when both collectors of liquid purification unit 2 are formed from elements 6. All hollows for raw liquid of the lower elements 6.2-1, 6.2-2, 6.2-3, 6.2-4 are connected between each other through adapter plugs 8, and hollow of the element 6.2-1 is connected to raw liquid supply line. All hollows for purified liquid of the elements 6.2-5, 6.2-6, 6.2-7, 6.2-8 are connected through adapter plugs 8, and hollow for the purified liquid of the element 6.2-8 is connected to purified liquid line 3. All hollows for the drainage liquid of the elements 6.2-5, 6.2-6, 6.2-7, 6.2-8 are between each other through adapter plugs 8 and hollow for the drainage liquid of the element 6.2-8 is connected to drainage liquid line 4. And further similarly, according to amount of membranes in the liquid purification unit 2.

On the figure 3c an example of the series-parallel connection is depicted. The upper collector is formed of elements 7 and the lower - of elements 6. Hollows of processed liquid of elements 7.3-8 and 7.3-7 are connected between each other through adapter plugs 8. Hollow of the raw liquid of the element 7.3-6 is connected through adapter plug with hollow of the processed liquid of the element 7.3-7. Hollow of the raw liquid of the element 6.3-1 is connected to raw liquid supply line 1 and through adapter plug 8 is connected with hollow of the raw liquid of the element 6.3-2. Hollow of the processed liquid of the element 6.3-3 is connected to a hollow of raw liquid of the element and through adapter plug 8 is connected with hollow of the raw liquid of the element 6.3-4. The third hollows of the elements 7.3-5, 7.3-6, 7.3-7, 7.3-8 are connected between each other through the adapter plugs 8 and intended for drain liquid discharge after the last membrane 5 along the drainage liquid line 4.

On the figure 3d an example of the system with recirculation and series-parallel connection of membranes 5 is given. One collector is formed of the elements 7, the second - of elements 6. Hollow for the raw liquid of the 6.4-1 is connected to raw liquid supply line 1 and through adapter plug 8 to hollow of the raw liquid of the element 6.4-2. Hollows of the processed liquid of elements 7.4-8 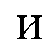 7.4-7 are connected between each other through adapter plugs 8. Hollow of the raw liquid of the element 7.4-6 through adapter plug 8 is connected with hollow of the processed liquid of the element 7.4-7. Hollow of the processed liquid of the element 7.4.3 is connected with hollow of the raw liquid of the element 6.4-4. Hollows of the elements 7.4-5, 7.4-6, 7.4-7, 7.4-8 are connected between each other through the adapter plugs 8 and intended for drainage liquid discharge after the last membrane 5 along the drainage liquid line 4. In the system shown in figure 3d there is a recirculation line 10 which is connected to drainage liquid outlet of the third hollow of the element 7.4-8 and to the inlet of the raw liquid of the element 7.4-1.

Also membranes of different size and productivity can be used in the claimed system. It is possible due to connection means comprising to details: elbow fitting 11 (figure 4) and coupler 12. Coupler 12 is configured with three hollows and helps to build on liquid purification unit 2 (figure 4). In dependence of its length, one of two membrane elements can be installed within one shell. Optionally at least one empty shell (not depicted in the figures) for the raw liquid can be installed in the liquid purification unit 2. Such shell can be used as pressure accumulator in case of pressure drops in the system.

Under the scope of distinguishing features claimed liquid purification system operates as follows. Raw liquid from the raw liquid supply flows into liquid purification unit 2 along raw liquid supply line 1. Purified liquid from the unit flows into purified liquid line 3 and drainage liquid - into the drainage liquid line 4 (figure 1). If the system optionally comprises recirculation line 10, drainage liquid flows along this line to inlet of the liquid purification unit 2. Membranes operation sequence of can be different within liquid purification unit 2.

In series connection of membranes (figure 2a) raw liquid flows into hollow for the raw liquid of the element 6.1-1. Purified liquid flows into the hollow for the purified liquid of the first element 6.1-1. Processed liquid through the hollow of processed liquid of the element 6.1-8 and through adapter plug 8 flows into the hollow for the raw liquid of the element 6.1-7. Then liquid is purified in the second membrane 5. Purified liquid flows into the hollow of the purified liquid of the element 6.1-7. Processed liquid through the hollow of processed liquid of the element 6.1-2 and through adapter plug 8 flows into the hollow for the raw liquid of the element 6.1-3. Sequence repeats. So processed liquid of the first membrane 5 is the raw liquid for the second membrane 5 and so on. Purified liquid from all membranes flows through all hollows for purified liquid of the 6.1-5, 6.1-6, 6.1-7, 6.1-8 and through purified liquid line 3 flows to a consumer. Drainage liquid flows out of the last membrane and through hollow for the drainage liquid of the element 6.1-4 and through adapter plugs 8 goes along all hollows for the drainage liquid of all lower elements and through drainage liquid line 4 is discharged from the system.

In parallel connection of membranes 5 (figure 2b) raw liquid equally spreads between all hollows for the raw liquid of the elements 6.1-1, 6.1-2, 6.1-3, 6.1-4. Then liquid is purified. Processed liquid flows out of each membrane and goes into the hollows for processed liquid of each element 6.1-5, 6.1-6, 6.1-7, 6.1-8, all hollows are connected between each other though adapter plugs 8 and form one common channel. Purified liquid from membranes flows into hollows for the purified liquid of the elements 6.1-5, 6.1-6, 6.1-7, 6.1-8, and all hollows for the purified liquids are connected between each other though adapter plugs 8 and form one common channel through which purified liquid flows into purified liquid line 3. Drainage liquid is discharged along the drainage liquid line 4 out of the system.

In series-parallel connection of membranes (figure 3c) raw liquid along raw supply liquid line 1 flows simultaneously into hollows for raw liquid of elements 6.3-1 and 6.3-2. Then liquid is purified. Processed liquid from the elements 7.3-8 and 7.3-7 flows into the hollow for raw liquid of the element 7.3-6. Processed liquid from the hollow for the processed liquid of the third element 6.3-3 through adapter plug 8 flows into the hollow of the raw liquid of the fourth element 7.3-4. Drainage liquid from the hollow for processed liquid of the element 7.3-5 flows through the third hollows of all elements 7.3-5, 7.3-6, 7.3-7, 7.3-8 and along drainage liquid line 4, connected to the third hollow of the element 7.3-8 is discharged from the system. Purified liquid from all membranes flows through all hollows of the elements 7.3-5, 7.3-6, 7.3-7, 7.3-8 and if supplied to a consumer.

In the system with recirculation with series-parallel connection of membranes (figure 3d) raw liquid along raw liquid supply line 1 equally spreads between hollows for raw liquid of elements 6.4-1 and 6.4-2. Processed liquid flows into the hollows for the processed liquid of the elements 7.4-8 and 7.4-7 and through the adapter plug 8 goes into the hollow for the raw liquid of the element 7.4-6. Processed liquid flows out of the hollow for the processed liquid of the element 6.4-3 and through adapter plug 8 goes into the hollow for the raw liquid of the element 6.4-4. Drainage liquid through the hollow for the drainage liquid of the element 7.4-5 through adapter plugs 8 goes through all the hollows for the drainage liquid of the elements 7.4-5, 7.4-6, 7.4-7, 7.4-8 and through recirculation line 10 and pump 14 to the liquid purification unit 2 inlet. After several cycles drainage liquid is discharged from the system along drainage liquid line 4.

Liquid purification unit comprises separate elements and connecting its geometry can be changed and the system may be installed either horizontally or vertically.

In comparison with the closest analogue due to the elements of two types the configuration of the liquid purification unit easily changes, and the system may be adapted to different conditions and installed in different areas. Also due to construction of adapter plugs, equipped with clamping device, connections inside liquid purification unit are airtight during pressure drops and vibrations. Also, vibrations are compensated is due to that liquid purification unit is made of plastic, but not from the metal. In case of failure of membrane of one type, it can be changed to the membrane of the other type due to connection means. During operation period, one of the membranes may be taken away or be changed to membrane of the other type.

The description of the present invention submits a preferred embodiment of the invention. It can be changed within the claimed set of the claims, so the wide use of the invention is possible.

## Claims

1. Liquid purification system comprising a raw liquid supply line, a liquid purification unit connected to the raw liquid supply line, a purified liquid line connected to a purified liquid outlet of the liquid purification unit, and a drainage liquid line connected to a drainage liquid outlet of the liquid purification unit, besides the liquid purification unit comprises at least two membranes in shells and connected to each other through two collectors, ***characterized in* that** each collector is formed by at least two elements communicating with each other through adapter plugs and connected with each other with fastener.

2. The liquid purification system according to the claim 1, **characterized in that** the connection between the collectors and the adapter plugs is threadless, and the adapter plugs are equipped with stoppers made as clamps.

3. The liquid purification system according to the claim 1, **characterized in that** the system further comprises a recirculation line connected to the drainage liquid line and to the raw liquid supply line before an input of the liquid purification unit.

4. The liquid purification system according to the claim 1, **characterized in that** the liquid purification unit comprises an additional coupling element.

5. The liquid purification system according to the claim 1, **characterized in that** the liquid purification unit comprises an additional empty membrane shell.
